# EUROPEAN PATENT SPECIFICATION

(11) **EP 0 660 786 B1**
(45) Date of publication and mention of the grant of the patent: **15.01.1997**
(21) Application number: 92921598.6
(22) Date of filing: 15.09.1992
(51) Int. Cl.: B44D 3/16, C09D 9/00, B27K 3/02

(54) **A METHOD OF CLEANSING WOODWORK**
REINIGUNGSMETHODE FÜR HOLZWERK
PROCEDE DE NETTOYAGE DU BOIS

(43) Date of publication of application: 05.07.1995
(73) Proprietor: SCHIRNIG, Ulrich Herbert, DK-1117 Copenhagen K (DK)
(72) Inventor: SCHIRNIG, Ulrich Herbert, DK-1117 Copenhagen K (DK)
(74) Representative: Noergaard, Tage
(86) International application number: DK9200278
(87) International publication number: WO9406638

(56) References cited:
- WO-A-92/19429
- DK-A- 48 291
- FR-A- 397 786
- SE-B- 465 760

## Description

### Technical Field

The invention relates to a method of cleansing woodwork, the surface of which has previously been treated with paint, said method comprising the immersion of the wooden objects in cleansing fluid in the form of hot oil.

### Background Art

It is knwon from French patent No. 397,786 to immerse wood in 100-110°C hot linseed oil to obtain a dry wooden product.

Swedish patent No. 1378 discloses the immersion of wood in an about 150° C hot mixture of cottonseed oil and resin to obtain a hard, water resistant product which is resistant to acids and alkali.

However, none of these patents mention the removal of old paint.

### Disclosure of the Invention

It is the object of the invention to provide a method of the type described above which renders possible the cleansing and priming of the woodwork in a more gentle and inexpensive method than hitherto known, as
- the paint is removable by application of only light mechanical force,
- it is possible to cleanse the objects successively and divided into individual sections
- possible residues of the cleansing fluid in or on the woodwork may form a natural part of a later treatment with paint,
- no dismounting of hardware mounted on the woodwork is necessary to impregnate the woodwork hidden by said hardware, as the cleansing fluid penetrates behind the hardware through the wood.

The method according to the invention is characterised by immersing the wooden objects in hot vegetable oil, preferably linseed oil, heated to about 150-250°C, until the paint is loosened or dissolved and subsequently cleansing the wooden objects by application of light mechanical force. As a result, mechanical cleansing by means of a filling knife, a brush or the like may be carried out without damaging the objects. After the cleansing, profiling and finer details of the objects stand out cleanly and sharply as when the objects were new. Linseed putty around e.g. window glass is also softened by the hot oil and is therefore easily removable. The oil which has penetrated into the objects hardens after natural drying and thereby provides the wood and possible joints with a certain rigidity. The objects will thus not tend to warp. It is not necessary to dismount hardware and the like from the objects as the oil easily penetrates behind said hardware. When the paint has been removed, oil residues on the objects form a priming layer onto which new paint may be applied, if desired.

An embodiment of the inventive method is characterised in that the immersion in the hot oil is carried out for a period long enough for the oil to penetrate at least partly into the wood, whereby a particularly effective softening not only of old paint but also of linseed putty on the objects is obtained, thereby rendering possible a particularly effective cleansing.

According to the invention the wood may be heated to such an extent in connection with the immersion in the oil to dissolve the paint that the temperature in the interior of the wood exceeds the living conditions of cellar fungus. As a result another fungicide is provided for the prevention of fungal attack on and in objects from building and housing.

According to the invention the wood may be heated to such an extent in connection with the immersion in the oil to dissolve the paint that the temperature in the interior of the wood exceeds the living conditions of insects, whereby possible insect attacks may be effectively repelled.

According to the invention the vegetable oil used may contain fungicides to obtain a wooden surface resistant to fungal attack. This version of the method has also proved to be very effective.

Yet another embodiment of the method according to the invention is characterised in that the oil used contains a drier (siccative) to expedite the drying of the oil which has penetrated into the wood when immersed.

Further according to the invention, the objects may be subjected to preheating prior to the immersion thereby avoiding that the attached glass (e.g. in window frames) breaks when immersed in the oil. In case of window frames with antique glass, the preheating may take place by immersing the objects in luke-warm oil whereby the glass is not subjected to shock stress and thus remains intact. Possibly, window frames and glass may be preheated in a heating chamber.

Moreover, according to the invention the objects may be subjected to heat, e.g. in drying chamber, after the immersion. During the drying/hardening, the linseed oil expands by about 5-10% through the absorption of oxygen molecules. The inner structure of the wood is thereby stiffened, allowing the wood to be firm again and to be worked mechanically. Joints, e.g. mortise joints in windows, are made tight and firm.

Finally, according to the invention the temperature of the hot oil may be in the range of 170-210°C, preferably 175-195°C.

The invention is described in greater details below with reference to the Examples.

### Example 1

15 window frames with old paint on them were successively cleansed by means of the method according to the invention. The cleansing was carried out by immersing the window frames in a 180°C hot bath containing linseed oil for about 15 minutes after having broken the attached glass. After being removed from the bath, the frames were cleansed of paint and putty residue by means of a fitting knife, as the old paint had become soft and could relatively easily be scraped off. Some of the paint and the putty fell off by itself in the bath. The remainder of the paint and putty was removed by means of mechanical brushing.

The window frames were then placed in a drying chamber for about 24 hours to expedite the drying of the oil. In addition to dissolving the old paint, the oil also penetrated under hardware and into the joints of the wood, e.g. at bars and corner joints, whereby a stronger (harder and tighter) wooden surface was obtained at these places after drying.

The old paint on the woodwork comprised several layers of oil paint (based on natural oils and synthetic oil).

As a result of the treatment, the window frames were nicely clean and this was obtained without the frames warping. The treatment was carried out so gently that the mechanical part of the cleansing process left no unfortunate traces of the scraping.

### Example 2

10 window frames with old paint on them and provided with antique glass were preheated in a heating chamber by gradually increasing the temperature from room temperature to about 120°C.

Subsequently, the window frames were immersed one by one in an about 190°C hot bath of the same nature as in Example 1. After about 20 minutes, the window frames were removed from the bath and subjected to mechanical surface treatment as in Example 1.

The cleansed window frames were easily freed of the antique glass without the glass breaking. The frames now appeared nice and clean and it was possible without major problems to mount them at their old place in the building in which they had previously been placed and which was being renovated.

### Example 3

10 window frames corresponding to the window frames mentioned in Example 2 above were treated in the same manner as in Example 2, the temperature of the bath however being
about 200°C. Reheating of the frames was carried out in a drying chamber at about 50°C. The cleansed window frames looked nice and their surfaces were suitable hard, whereby a surface ready to paint was obtained corresponding to a surface which had been primed.

## Claims

1. A method of cleansing woodwork the surface of which has previously been treated with paint, said method comprising immersing the wooden objects into a cleansing fluid in the form of hot oil, preferably linseed oil heated to 150-250°C, until the paint is dissolved or loosened and subsequently cleansing the wooden objects by application of light mechanical forces.

2. A method as claimed in claim 1, **characterised** in that the immersion in the hot oil is carried out for a period long enough for the oil to penetrate at least partly into the wood.

3. A method as claimed in claim 1 or 2, **characterised** in that the wood is heated to such an extent in connection with the immersion in the oil to dissolve the paint that the temperature of the interior of the wood exceedes the living conditions of cellar fungus.

4. A method as claimed in claim 1 or 2, **characterised** in that the wood is heated to such an extent in connection with the immersion in the oil to dissolve the paint that the temperature of the interior of the wood exceedes the living conditions of insects.

5. A method as claimed in one or more of the claims 1 - 4, **characterised** in that the the vegetable oil used contains fungicides to obtain a wooden surface which is resistant to fungal attack.

6. A method as claimed in one or more of the claims 1 - 5, **characterised** in that the oil used contains a drier (siccative) to expedite the drying of the oil which has penetrated into the wood when immersed.

7. A method as claimed in one or more of the claims 1 - 6, **characterised** by subjecting the objects to preheating prior to the immersion in the hot oil.

8. A method as claimed in one or more of the claims 1 - 7, **characterised** by subjecting the objects to heat, e.g. in a drying chamber, after the immersion in the hot oil.

9. A method as claimed in one or more of the claims 1 - 8, **characterised** in that the temperature of the hot oil is in the range of 170° - 210°C, preferably 175°-195°C.

## Patentansprüche

1. Verfahren zur Reinigung von Holzwerk, dessen Oberfläche zuvor mit Farbe behandelt wurde, wobei das Verfahren das Eintauchen der hölzernen Gegenstände in eine Reinigungsflüssigkeit in Form eines heißen Öls, vorzugsweise auf 150-250°C erhitztes Leinöl, bis die Farbe aufgelöst oder abgelöst wird, und das anschließende Reinigen der hölzernen Gegenstände durch Anwendung leichter mechanischer Kräfte umfaßt.

2. Verfahren gemäß Anspruch 1, dadurch gekennzeichnet, daß das Eintauchen in das heiße Öl lange genug durchgeführt wird, so daß das Öl wenigstens teilweise in das Holz eindringen kann.

3. Verfahren gemäß Anspruch 1 oder 2, dadurch gekennzeichnet, daß das Holz im Zusammenhang mit dem Eintauchen in das Öl zum Auflösen der Farbe so stark erhitzt wird, daß die Temperatur im Innern des Holzes die Lebensbedingungen des Braunen Kellerschwamms (*Coniophora puteana*) überschreitet.

4. Verfahren gemäß Anspruch 1 oder 2, dadurch gekennzeichnet, daß das Holz im Zusammenhang mit dem Eintauchen in das Öl zum Auflösen der Farbe so stark erhitzt wird, daß die Temperatur im Innern des Holzes die Lebensbedingungen von Insekten überschreitet.

5. Verfahren gemäß einem oder mehreren der Ansprüche 1 bis 4, dadurch gekennzeichnet, daß das verwendete Pflanzenöl Fungizide enthält, um eine Holzoberfläche zu erhalten, die gegen Pilzbefall resistent ist.

6. Verfahren gemäß einem oder mehreren der Ansprüche 1 bis 5, dadurch gekennzeichnet, daß das verwendete Öl ein Trockenmittel enthält, um das Trocknen des Öles zu beschleunigen, das beim Eintauchen in das Holz eingedrungen ist.

7. Verfahren gemäß einem oder mehreren der Ansprüche 1 bis 6, dadurch gekennzeichnet, daß die Gegenstände vor dem Eintauchen in das heiße Öl vorerhitzt werden.

8. Verfahren gemäß einem oder mehreren der Ansprüche 1 bis 7, dadurch gekennzeichnet, daß die Gegenstände nach dem Eintauchen in das heiße Öl in der Hitze behandelt werden, z.B. in einer Trockenkammer.

9. Verfahren gemäß einem oder mehreren der Ansprüche 1 bis 8, dadurch gekennzeichnet, daß die Temperatur des heißen Öls im Bereich von 170°C bis 210°C, vorzugsweise 175°C bis 195°C, liegt.

## Revendications

1. Procédé de nettoyage d'un ouvrage en bois dont la surface a été traitée au préalable avec de la peinture, ledit procédé comprenant l'immersion des objets en bois dans un fluide de nettoyage se présentant sous la forme d'une huile chaude, de préférence de l'huile de graine de lin chauffée à une température de 150 à 250°C, jusqu'à ce que la peinture soit dissoute ou dispersée et, ensuite, le nettoyage des objets en bois par l'application de légères forces mécaniques.

2. Procédé selon la revendication 1, caractérisé en ce que l'immersion dans l'huile chaude est exécutée pendant une période suffisamment longue pour que l'huile pénètre au moins partiellement dans le bois.

3. Procédé selon la revendication 1 ou 2, caractérisé en ce que le bois est chauffé à une valeur, en liaison avec l'immersion dans l'huile pour dissoudre la peinture, telle que la température de l'intérieur du bois dépasse les conditions de vie d'un champignon de cave.

4. Procédé selon la revendication 1 ou 2, caractérisé en ce que le bois est chauffé à une valeur, en liaison avec l'immersion dans l'huile pour dissoudre la peinture, telle que la température de l'intérieur du bois dépasse les conditions de vie d'insectes.

5. Procédé selon l'une ou plusieurs des revendications 1 à 4, caractérisé en ce que l'huile végétale utilisée contient des fongicides pour obtenir une surface en bois qui résiste à une attaque par des champignons.

6. Procédé selon l'une ou plusieurs des revendications 1 à 5, caractérisé en ce que l'huile utilisée contient un agent de séchage (siccatif) pour accélérer le séchage de l'huile qui a pénétré dans le bois immergé.

7. Procédé selon l'une ou plusieurs des revendications 1 à 6, caractérisé par l'exposition des objets à un chauffage préalable avant l'immersion dans l'huile chaude.

8. Procédé selon l'une ou plusieurs des revendications 1 à 7, caractérisé par l'exposition des objets à un chauffage, par exemple dans une chambre de séchage, après immersion dans l'huile chaude.

9. Procédé selon l'une ou plusieurs des revendications 1 à 8, caractérisé en ce que la température de l'huile chaude est comprise dans la plage allant de 170 à 210°C, de préférence de 175 à 195°C.
